# EUROPEAN PATENT SPECIFICATION

(11) **EP 3 092 409 B1**
(45) Date of publication and mention of the grant of the patent: **19.05.2021**
(21) Application number: 14877900.2
(22) Date of filing: 16.12.2014
(51) Int. Cl.: F04B 49/02, B60T 17/02, B60T 17/18, F04B 49/06, F04B 49/10

(54) **METHOD AND SYSTEM TO DETERMINE STATUS FOR A COMPRESSOR ENGAGEMENT**
VERFAHREN UND SYSTEM ZUR BESTIMMUNG DES STATUS EINER KOMPRESSORKUPPLUNG
PROCÉDÉ ET SYSTÈME PERMETTANT DE DÉTERMINER L'ÉTAT D'UNE MISE EN PRISE D'UN COMPRESSEUR

(30) Priority: 08.01.2014 SE 1450006
(43) Date of publication of application: 16.11.2016
(73) Proprietor: Scania CV AB, 151 87 Södertälje (SE)
(72) Inventor: KÄLD, Ricard, S-152 54 Södertälje (SE); LUNDSTRÖM, Andreas, S-904 40 Röbäck (SE)
(74) Representative: Scania CV AB
(86) International application number: PCT/SE2014/051511
(87) International publication number: WO 2015/105447

(56) References cited:
- EP-A2- 0 066 874
- JP-A- 2006 250 436
- JP-A- 2006 250 436
- JP-A- 2010 032 143
- US-A- 5 249 429
- US-A- 5 347 824
- US-A1- 2006 196 168
- US-A1- 2008 015 769
- US-A1- 2008 173 033
- US-A1- 2008 264 921
- US-B1- 6 381 545

## Description

### Field of the invention

The present invention relates to compressors that may be engaged selectively with the use of a clutch, and in particular to a method to determine the status of a compressor engagement. The invention also pertains to a system and a vehicle, as well as a computer program and a computer program product, which implement the method according to the invention.

### Background of the invention

There are generally different types of compressors, and compressors are also used within a large number of application areas. Compressors are usually powered by a drive motor, such as a combustion engine or another type of engine.

A compressor may be arranged to be fixedly connected with the drive engine, so that the compressor thus rotates when the drive engine rotates. A compressor may also be arranged to be selectively engaged to the drive engine, so that the drive engine may rotate without the compressor needing to be in operation. In such situations the compressor is often arranged to be engaged via a clutch, where such a clutch may be of different type. Selective engagement of the compressor has the advantage, among others, that the compressor wear may be reduced, while the drive engine's energy consumption may be reduced by not unnecessarily applying the load represented by the compressor.

Such compressor systems are applied in e.g. heavy goods commercial vehicles and may be used for provision of compressed air to different systems in the vehicle. For example, the service brake in heavy goods vehicles is often driven by compressed air, and likewise e.g. suspension systems may be driven by compressed air. Compressed air may e.g. also be used to open/close doors, such as bus doors.

Such compressed air systems are therefore often very important for the vehicle's function, and a compressed air loss often entails that the vehicle's service brake becomes inoperative, with a vehicle at standstill as a consequence.

The compressed air requirement is normally not such, however, that continuous operation of the compressor is required, but the compressor may be disengagement for long periods, in particular in e.g. motorway driving, where the use of compressed air systems is often minor.

While the selective engagement thus provides benefits, it is obviously important that the engagement functions as intended.

JP 2006 250436 A discloses a heat pump comprising a compressor that is driven by a motor through a clutch. The engine speed is monitored, and the monitored engine speed is used to determine whether the clutch slips in operation.

### Summary of the invention

One objective of the present invention is to provide a method to determine a status for a compressor engagement in e.g. vehicles. This objective is achieved with a method according to claim 1.

The present invention relates to a method to determine a status for a compressor engagement, wherein a compressor is selectively engagable to a first engine with the use of a clutch. The method comprises, when a signal relating to the engagement of said compressor is emitted:
- detection of an engine speed change in said first engine, and
- with the use of said detected engine speed change, determining a status for said compressor engagement.

Said signal relating to engagement of said compressor may consist of a request for an engagement or a request for a dis engagement of said compressor. Furthermore, said status for said compressor engagement may e.g. consist of a status for said clutch.

In relation to e.g. vehicles, it is important that the compressor engagement functions correctly in order to be able to drive the vehicle safely, since a malfunctioning engagement, e.g. depending on a malfunctioning clutch, will entail a loss of compressed air, with the consequence that the vehicle's service brake system becomes inoperative. The clutch usually consists of a multi-plate clutch, where the plates are worn over time. If the plates become completely worn, this will entail that the compressor may not be activated, and such a situation results in a depressurised compressed air system, with a vehicle at standstill and towing to a garage as a consequence.

According to the present invention, the status for the compressor engagement may be determined, wherein e.g. a clutch wear or potential leak may be determined, and wherein a signal may be generated as and when needed. For example, an error code may be activated, and/or the driver may be advised to visit a garage.

According to the invention, an engine speed change is detected in the engine, and with the use of the detected engine speed change, the status for the compressor is determined. A representation of the compressor's time for engaging and/or disengaging of said compressor may be determined, and the status may be determined based on such representation.

The engagement time will depend on the movement of the clutch plates, where such movement will be longer the more the clutch is worn. Additionally, the wear results in a longer stroke and an impaired lever for the clutch spring, further extending the period of time that the clutch slips. Accordingly, the time it takes to engage the compressor will become longer as the clutch is worn.

Said representation of the engagement or disengagement time may e.g. consist of a measured time, so that the time from the emission of the engaging signal until the engine speed change is detected may be used to determine the status of the compressor engagement. For example, this time may be compared with a first time, wherein a status for said compressor engagement may be determined based on said comparison. If, for example, the engagement time exceeds a first time, a signal may be generated, which may e.g. constitute activation of an error code or inform the vehicle's driver that control/service of the compressor engagement is required.

The representation of the compressor's engagement time may, alternatively, e.g. be determined based on a derivative for the engine's engine speed change when the compressor is engaged, wherein the derivative may be compared with an expected value or a previously determined derivative to determine the status for the compressor engagement.

Furthermore, several representations of said engagement and/or disengagement time may be determined, wherein the status for said compressor engagement may be determined based on said several representations. For example, a trend for changes over time in said several representations of engagement and/or disengagement time may be determined, and based on which status for the compressor engagement may be determined, e.g. by comparing a determined trend with an expected trend.

The engagement of said compressor with said clutch is preferably arranged to be controlled by a control device.

Furthermore, the method may be arranged to emit the engagement signal for engagement and/or disengagement of said compressor, and thus determine when the status for the compressor engagement is to be determined.

Further characteristics of the present invention and advantages thereof will be described in the detailed description of example embodiments set out below and in the enclosed drawings.

### Brief description of the drawings

- Fig. 1A: shows a powertrain in a vehicle, in which the present invention may advantageously be used.
- Fig. 1B: shows a control device in a vehicle control system.
- Fig. 2: schematically shows a compressor system in which the present invention may be applied.
- Fig. 3: schematically shows an example method according to one embodiment of the present invention.
- Fig. 4: shows one example of a disengagement and an engagement of a compressor.

### Detailed description of preferred embodiments

The present invention will be exemplified below for a vehicle. The invention is also applicable, however, in other types of transport means, such as watercraft, as long as the transport means comprises a compressor that may be engaged via a clutch to an engine, where the compressor is arranged to be powered by the engine.

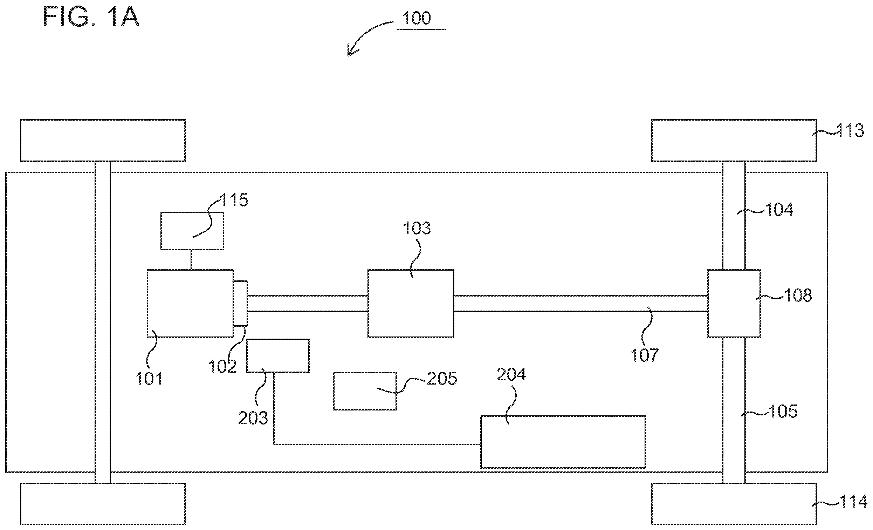

Fig. 1A schematically shows a driveline in a vehicle 100, according to an embodiment of the present invention. The method shown in Fig. 1A schematically shown vehicle 100 comprises a powertrain with a combustion engine 101, which in a customary manner, via an output shaft on the combustion engine 101, usually via a flywheel 102, is connected to a gearbox 103. The combustion engine 101 is controlled by the control system of the vehicle 100 via a control device 115.

An output shaft 107 from the gearbox 103 drives, in a customary way, the wheels 113, 114 via a final gear 108, e.g. a customary differential, and the drive shafts 104, 105 connected to said final gear 108.

The 1A displayed example does not show the transmission system specifically, instead this may be of any applicable type, such as a type with automatically shifted manual gearboxes, manually shifted gearboxes, double clutch boxes, conventional automatic gearboxes, etc. Likewise, the invention is equally applicable in all types of vehicles where an engine is used, regardless of the type of engine, as long as a compressor may be engaged selectively to said engine.

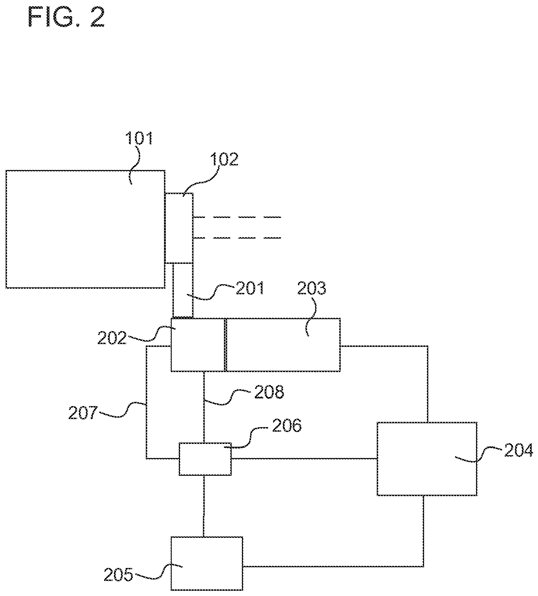

Fig. 1A displays a compressor 203 which may be connected to the combustion engine 101 for generation of compressed air, where the generated compressed air is accumulated in an accumulator tank 204. Engagement and disengagement of the compressor 203 is controlled by a control device 205. The system for engagement of the compressor is described in further detail in Fig. 2.

The engagement of the compressor is thus controlled by the control device 205, and the vehicle of the type displayed usually comprises a control system for control of the vehicle's different functions.

According to the present invention, a status for the compressor engagement is determined, where such status may consist of a clutch wear or the occurrence or non-occurrence of a leakage in the engagement system. The method according to the invention may be arranged to be carried out by some applicable control device in the vehicle's control system, and may e.g. be arranged to be carried out by the control device 205 or another applicable control device in the vehicle, such as the engine control device 115. The control device may thus consist of any suitable control device in the vehicle's control system. The invention may also be implemented in a control device dedicated to the present invention.

Generally, such control systems consist of a communications link system consisting of one or several communication buses to connect a number of electronic control devices (ECUs), or controllers, and different components arranged in the vehicle 100. Such a control system may thus comprise a large number of control devices, and the responsibility for a specific function may be distributed among more than one control device. For the sake of simplicity, in Fig. 1A only a very limited number of control devices, and in practice the number of control devices may be substantially greater than in the present example.

The function of the control device 205 (or the control device(s) at which the present invention is implemented), according to the present invention, may, e.g. depend on signals from different sensors, such as a sensor for delivery of the combustion engine's engine speed. Furthermore, the function according to the invention may depend on signals from one or several other control devices. For example, data relating to the combustion engine's engine speed may, alternatively, be received from the control device 115. Furthermore, the invention may be implemented in a control device separate from the control device 205, wherein the control device in which the invention is implemented may receive a signal relating to the compressor engagement, such as a request for engagement or disengagement of the compressor.

Furthermore, the control is often carried out by programmed instructions. These programmed instructions typically consist of a computer program which, when executed in a control device, causes the control device to carry out the desired control action, such as a method step according to the present invention.

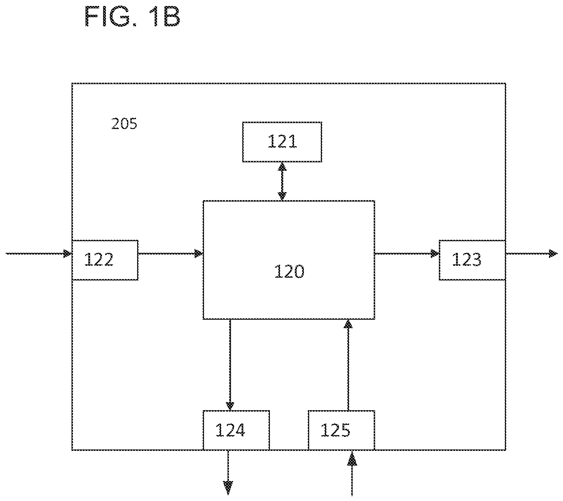

The computer program is usually a part of a computer program product, where the computer program product comprises an applicable storage medium 121 (see Fig. 1B), with the computer program stored on said storage medium 121. Said digital storage medium 121 may e.g. consist of any from the following group: ROM (Read-Only Memory), PROM (Programmable Read-Only Memory), EPROM (Erasable PROM), Flash, EEPROM (Electrically Erasable PROM), a hard disk unit, etc., and may be set up in or in combination with the control device, where the computer program is executed by the control device. By changing the computer program's instructions, the vehicle's behaviour may thus be adjusted in a specific situation.

An example control device (control device 205) is shown schematically in Fig. 1B, and the control device in turn may comprise a calculation unit 120, which may consist of e.g. a suitable type of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121, which provides the calculation unit 120 with e.g. the stored program code and/or the stored data that the calculation unit 120 needs in order to be able to carry out calculations, e.g. to determine whether an error code should be activated. The calculation unit 120 is also set up to store interim or final results of calculations in the memory unit 121.

Further, the control device is equipped with devices 122, 123, 124, 125 for receiving and sending of input and output signals. These input and output signals may contain waveforms, pulses or other attributes which, by the devices 122, 125 for the receipt of input signals, may be detected as information for processing by the calculation unit 120. The devices 123, 124 for sending output signals are arranged to convert the calculation result from the calculation unit 120 into output signals for transfer to other parts of the vehicle's control system and/or the component(s) for which the signals are intended. Each one of the connections to the devices for receiving and sending of input and output signals may consist of one or several of the following: a cable; a data bus, such as a CAN (Controller Area Network) bus, a MOST (Media Oriented Systems Transport) bus, or any other bus configuration; or of a wireless connection.

The present invention provides a method to diagnose the compressor engagement's status, so that a malfunction and/or plate wear may be detected. Fig. 2 shows the compressor system in more detail. The figure shows a gear train 201 connected to the combustion engine's 101 output shaft, where the latter may e.g. be connected with the combustion engine 101 via the flywheel 102 or in another applicable manner rotationally connected with the combustion engine 101. The gear train 201 operates a first part of a clutch 202, so that said first clutch part is brought into rotation via the gear train 201 when the combustion engine is in operation, and so that the rotation speed for said clutch part in relation to the combustion engine's rotation speed may thus be adapted through applicable gearing via the gear train 201.

The clutch 202 also comprises a second clutch part, rotationally and fixedly connected with the compressor 203.

When said first and second clutch parts are brought together, the compressor 203 is thus brought into rotation by the combustion engine 101 when the combustion engine has been started. The compressor 203 compresses air that is accumulated in the compressed air tank 204, so that such compressed air, as mentioned above, is e.g. used by the vehicle's service brake system, air suspension, level control, etc.

When the compressor 203 is in engagement with the combustion engine 101, this thus constitutes a combustion engine load with associated energy/fuel requirements. Continuous operation of the compressor when the combustion engine 101 is running usually leads to larger amounts of compressed air being generated than what the vehicle consumes, which thus gives rise to unnecessary energy consumption and fuel consumption in the combustion engine as a consequence.

For this reason, the compressor 203 is disengaged by opening the clutch 202 when the accumulator tank 204 has been pressurised to the desired first pressure, so that the compressor 203 may be engaged again when the pressure in the accumulator tank 204 has dropped to some applicable second pressure.

Engagement/disengagement of the compressor 203 is controlled by the control device 205, which based on e.g. pressure signals from the accumulator tank 204 and/or another applicable position in the compressed air system controls the engagement of the compressor by opening/closing the clutch 202. The clutch 202 displayed consists of a clutch controlled by compressed air, and which is controlled by the compressed air generated by the compressor 203. Furthermore, the clutch 202 is of a type that, in a depressurised state, it is kept closed with e.g. a spring force, so that it may be ensured that the compressor 203 always starts when the combustion engine 101 is started, so that the required compressed air build-up may be ensured when the vehicle is started.

When the clutch 202 is to be opened, e.g. because the pressure in the accumulator tank has achieved a desired pressure, the control device 205 emits a control signal to a valve unit 206, which opens a passage 207 for supply of compressed air to the clutch 202, wherein the spring force that keeps the clutch closed may be overcome by the air pressure and the clutch is opened. As long as the pressure is maintained, the clutch is kept open. In the reverse, when the clutch is to be closed a signal is sent from the control device 205 to the valve unit 206 (or another applicable valve unit) for depressurisation of the clutch 202.

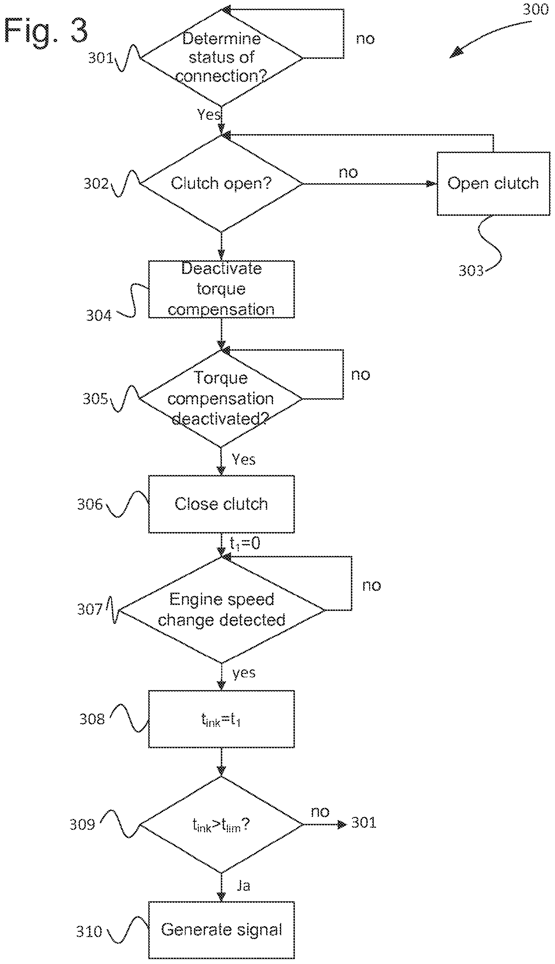

An example embodiment 300 according to the invention is displayed in Fig. 3, and the method starts at step 301 where it is determined whether the status for the compressor engagement should be determined. If so, the method continues to step 302. The transition from step 301 to step 302 may be arranged to meet some applicable condition. For example, one condition may be that the vehicle 100 is at a standstill with the combustion engine 101 idling. Alternatively, the condition may be that the vehicle 100 is driven at an even speed and thus an even combustion engine speed. However, a vehicle normally spends a large fraction of time with the combustion engine idling, e.g. at a standstill at red lights, unloading, loading, etc., and therefore it may be advantageous to carry out the method according to the invention at such situations.

Furthermore, a condition may, alternatively or in combination with the above, consist of the accumulator tank 204 being pressurised with some applicable pressure, e.g. the maximum pressure with which the accumulator tank 204 is normally pressurised. Alternatively, the condition may consist of the method according to the invention being carried out when the accumulator tank 204 is empty, i.e. basically immediately after starting a combustion engine.

Generally, the engagement time for the compressor 203 will depend on the back pressure prevailing for the compressor 203 at the engagement, i.e. the pressure against which the compressor 203 works at the engagement. Such pressure may vary from the atmospheric pressure in a depressurised system up to the maximum pressure of the compressed air circuit. If the back pressure is small, the compressor will increase its engine speed faster because of the lower resistance represented by the lower back pressure, while, in the reverse, if the back pressure is high, it will take longer for the compressor to increase its engine speed, and as a consequence the clutch will also slip for a longer time, i.e. the compressor engagement will take longer.

The time for engaging the compressor thus depends on the prevailing back pressure, which is why, according to one embodiment, the condition for the invention to be carried out may consist of the compressor's back pressure amounting to some applicable back pressure, so that determinations may be arranged to always be carried out at a certain back pressure.

According to one embodiment, however, determinations are carried out at different back pressures, but where a conversion factor, compensation factor, is applied at the determination to compensate for differences at different back pressures, where such compensation factor may e.g. consist of a function of the back pressure, or an empirically determined factor for different back pressures.

The invention may also be arranged to be carried out at different conditions, where several determinations for each prevailing condition may be arranged to be carried out, so that measurement results obtained for different conditions may thus be used when the status for the compressor engagement is determined. Furthermore, the transition from step 301 to step 302 may be arranged to be carried out only if a certain time has elapsed since the previous occasion on which the status for the engagement was determined, such as a week or a month. According to one embodiment, however, the status is determined every time the right conditions prevail, and according to one embodiment, the determination is carried out as frequently as possible. The transition from step 301 to step 302 may also be arranged to be imposed if no diagnosis has been carried out within a certain time.

If the conditions for a transition from step 301 to step 302 are met, the method continues to step 302, where it is determined whether the compressor clutch is open. If this is not the case, the method continues to step 303, where the compressor clutch is opened via application of control of the valve unit 206, otherwise the method continues directly to step 304. According to one embodiment, no action is taken to open the clutch, but instead it is monitored when the clutch is open and a signal for closure of the clutch is detected, so that the method is carried out in such situations.

Vehicles of the type displayed often comprise a function for compensation of torque changes in order to thus reduce differences in the combustion engine speed. At step 304, a deactivation of such function is requested, and at step 305 it is determined whether the function has been deactivated. Deactivation of such function facilitates detection of engine speed changes according to the present invention, but the invention is also applicable without such functions being deactivated. According to one embodiment, the method is therefore carried out with such a function connected. Such functions are generally used to request an extra torque from the combustion engine, while new loads are connected with the objective of avoiding engine speed changes because of the changed load.

At step 306 a engagement of the compressor 203 is requested by sending a control signal to the valve 206 for pressure relief of the clutch 202. At the same time, a timer t₁ = 0 is set. The method then continues to step 307, where the combustion engine's engine speed is monitored and it is determined whether an expected engine speed change is detected. As long as the expected engine speed change has not been detected, the method remains at step 307 at the same time as the timer t₁ counts up. When the expected engine speed change is detected, the timer t₁ is stopped, and at step 308 the compressor's connection time is set tᵢₙₖ = t₁.

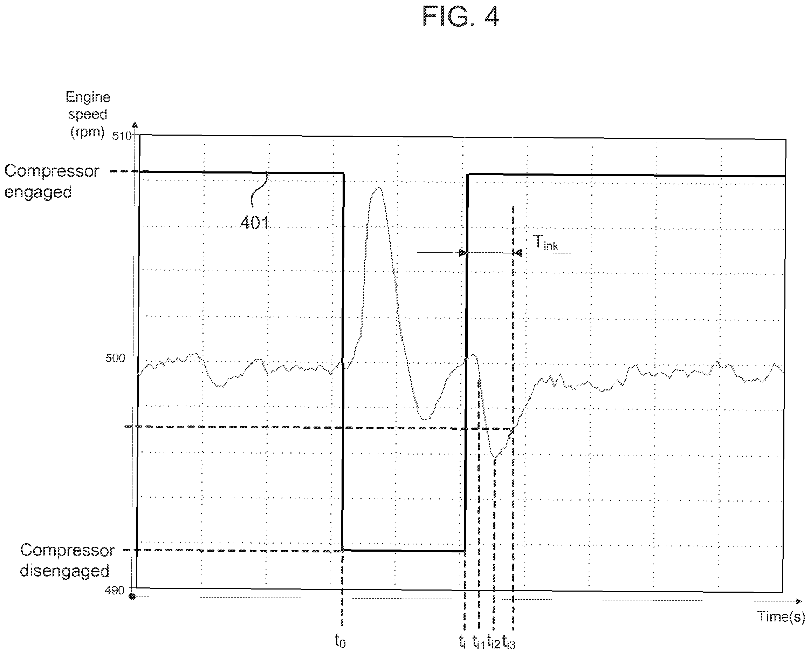

When the compressor 203 is engaged, this will result in an increase of the combustion engine's 101 load, and as a consequence the combustion engine's 101 engine speed will drop before a compensation for the increased load occurs. One example of a compressor engagement is shown in Fig. 4.

Fig. 4 represents the X axis time and the Y axis represents the combustion engine's engine speed. Up to the time t₀ the vehicle is driven with the compressor engaged, as indicated by the line 401. At the time t₀ the compressor is disengaged, e.g. based on a request according to step 303. This results in a combustion engine speed increase because of the reduced load. When the combustion engine's engine speed has stabilised, at the time tᵢ, the engagement of the compressor is requested, step 306, i.e. a closure of the clutch is requested, so that the time t₁ is thus counted as of the time tᵢ.

As of the request for engagement of the compressor 203, a certain time will lapse before the actual engagement of the compressor occurs because the compressed air in the clutch has to be evacuated so that the spring force overcomes the force from the compressed air and may thus compress the clutch. Additionally, the clutch plate or, typically, several plates carry out a movement when the clutch is closed. The engagement of the compressor starts at the time tᵢ₁, where the combustion engine's engine speed begins to drop when the clutch plates begin to engage the compressor. At the time tᵢ₂ the compressor is fully engaged, i.e. the entire compressor load has been applied to the combustion engine, wherein the combustion engine's engine speed governor controls the engine speed up towards idling engine speed. According to the present invention the engagement time is determined by way of carrying out an applicable determination based on the combustion engine's engine speed change. In the case illustrated in Fig. 4 displayed example the engagement time tᵢₙₖ is determined at a time tᵢ₃ when the engine speed has dropped to a lowest engine speed to increase again to some applicable engine speed, in the present example 497 rpm. The engagement time tᵢₙₖ may in this example thus be determined as tᵢ₃ - tᵢ, wherein such engagement time is stored at step 308.

The engagement time will become longer as the clutch plates wear, and at step 309 it is then determined whether tᵢₙₖ exceeds some applicable threshold value tₗᵢₘ, and if so, a signal may be generated at step 310. The type of signal generated may be arranged to depend on the size of tᵢₙₖ. For example, an error code may be activated if tᵢₙₖ is within a certain range, where such a range may represent a wear which is not immediately critical but which should be investigated at a subsequent visit. If the time tᵢₙₖ exceeds such a range, an indication to the vehicle's driver may be generated, e.g. the driver may be advised to visit a garage.

In the reverse, if at step 309 it is determined that tᵢₙₖ falls below the threshold value tₗᵢₘ, the method may revert to step 301 for a new determination.

The clutch 202 usually consists of a multi-plate clutch where the plates will be worn over time in order to finally become worn out. Since completely worn out plates will entail that the clutch may not be engaged, such a situation will result in a depressurised compressed air system, at least when accumulated compressed air has been consumed, with the vehicle at a standstill as a consequence.

The in Fig. 3 displayed method may thus be arranged to be carried out regularly, so that a trend for the engagement time tᵢₙₖ may be determined. For example, a curve representing the engagement time change over time may be generated, wherein e.g. a service technician may determine the clutch's status based on such a curve. For example, the curve may have a certain appearance where the engagement time will initially change (increase) faster because of the initial clutch wear, and subsequently stabilise and become more linear. Furthermore, different clutches may have different wear characteristics, wherein the characteristics may be determined for a certain type of clutch, e.g. by carrying out forced tests until the clutch is worn out, wherein changes in such a curve may be used as an indication of the prevailing clutch wear.

According to one embodiment, the determined engagement time tᵢₙₖ is converted into a corresponding movement for the clutch plates, wherein a certain length of movement indicates a certain wear and wherein a certain engagement time may thus be deemed to represent a worn-out clutch and wherein a signal may be generated at some applicable shorter threshold time, compared to the engagement time tᵢₙₖ.

Furthermore in Fig. 4, the engagement time has been determined at a time where the combustion engine's engine speed has increased again to a certain engine speed. Such determination may, however, be carried out for any engine speed determination, e.g. at the time tᵢ₂ when the engine speed's derivative changes signs, or by determining the engine speed derivative between the time tᵢ₁ and tᵢ₂, where such derivative will change as the clutch wears. In this case the derivative thus consists of a representation of the compressor's engagement time. Furthermore, engagement times may be compared with each other, e.g. by determining a trend where a sudden divergence from the trend, i.e. if the engagement time suddenly changes, may indicate other types of errors. For example, some types of blockage may entail that the pressure reduction at depressurisation of the clutch is slower, and as a consequence the engagement time becomes longer. Accordingly, a diverging behaviour may be detected wherein a signal representing e.g. a need for service or activation of an error code may be generated/carried out. According to one embodiment, e.g. the number of activations of the compressor may also be taken into consideration at the estimation of the clutch wear.

Furthermore, according to one embodiment, a corresponding determination may be carried out at disengagement of the compressor. As mentioned above, the compressor is disengagement through pressurisation of the clutch 202. By determining the time it takes before an engine speed increase is detected, where such engine speed increase may be determined in any applicable way corresponding to the above ways of reducing the engine speed, it may be determined whether the disengagement occurs within an expected time or whether such time differs from the expected time. If, for example, there is a leakage, the pressure build-up to overcome the spring force will take longer, so that such a leakage may thus be detected. Furthermore, such a leakage may entail that the pressure in the clutch becomes so low that there will be a certain clutch slip, with a markedly increased wear and thus a shortened clutch life as a consequence.

Other embodiments of the method and the system according to the invention are available in the claims enclosed hereto. For example, the engine need not consist of a combustion engine, but the engine may consist of some other applicable type of engine, such as an electric motor, etc.

## Claims

1. Method to determine a status for a compressor engagement, wherein a compressor (203) is selectively engagable to a first engine (101) with the use of a clutch (202), **characterised in that** the method comprises, when a signal relating to the engagement of said compressor (203) is emitted:
- detecting an engine speed change of said first engine (101),
- through the use of said detected engine speed change, determining a representation of an engagement and/or disengagement time at engagement and/or disengagement of said compressor,
- comparing said representation of an engagement and/or disengagement time (Tᵢₙₖ) with a first time (Tₗᵢₘ), and
- determining a status for said compressor engagement based on said comparison.

2. Method according to claim 1, wherein said signal relating to engagement of said compressor (203) consists of a request for a engagement or a request for a disengagement of said compressor (203).

3. Method according to claim 1, further comprising:
- generating a signal if said engagement and/or disengagement time exceeds a first time.

4. Method according to any of claims 1-3, also comprising, when said signal relating to the engagement of said compressor (203) is emitted:
- determining a first time (Tᵢₙₖ) from the emission of said signal relating to the engagement of said compressor (203) to said detection of said engine speed change in said engine (101), and
- determining a status for said compressor engagement based on said first time (Tᵢₙₖ).

5. Method according to claim 4, wherein said engine speed change consists of at least one from the group:
- an engine speed drop to a first engine speed of said engine following emission of said signal relating to the engagement of said compressor (203);
- a minimum engine speed of said engine following emission of said signal relating to the engagement of said compressor (203);
- an achieved engine speed of said engine after the engine speed at the engagement of said compressor (203) has passed.

6. Method according to any of the previous claims, wherein the status for said compressor engagement is determined at least partly based on a derivative for said engine speed change.

7. Method according to any of the previous claims, also comprising determining a representation of a engagement and/or engagement time at the engagement and/or disengagement of said compressor at several engagements or disengagements of said compressor, and
- determining a status for said compressor engagement based on said several representations of said engagement and/or disengagement time.

8. Method according to claim 7, further comprising to determine said representations of engagement and/or disengagement when the pressure against which said compressor works consists of a first pressure.

9. Method according to any of the previous claims, also comprising to emit said signal relating to the engagement of said compressor (203).

10. Method according to any of the previous claims, wherein said status for said compressor engagement consists of a status for said clutch (202).

11. Method according to claim 10, wherein said status for said clutch consists of a clutch wear.

12. Method according to any of the previous claims, where said clutch (202) consists of a clutch (202) controlled by compressed air.

13. Method according to claim 12, wherein said status for said compressor engagement relates to the existence of a leakage at said compressor engagement.

14. Method according to any of the previous claims, also comprising, before said signal relating to the engagement of said compressor (203) is emitted:
- deactivating functionality for compensation or torque changes at engagement and/or disengagement of a load to said engine.

15. Method according to any of the previous claims, wherein said compressor is arranged in a vehicle, also comprising:
- carrying out said method when said vehicle (100) is at a standstill with the combustion engine 101 idling.

16. Method according to any of the previous claims, also comprising controlling the engagement of said compressor (203) with a control device.

17. Computer program comprising a program code which, when said program code is executed in a computer, achieves that said computer carries out the method according to any of claims 1-16.

18. A computer program product comprising a computer-readable medium and a computer program according to claim 17, said computer program being comprised in said computer-readable medium.

19. System to determine a status for a compressor engagement, wherein a compressor (203) is selectively engagable to a first engine (101) through the use of a clutch (202), **characterised in that** the system comprises elements which, when a signal relating to the engagement of said compressor (203) is emitted:
- detects an engine speed change of said first engine (101), and
- through the use of said detected engine speed change, determines a representation of an engagement and/or disengagement time at engagement and/or disengagement of said compressor,
- compares said representation of an engagement and/or disengagement time (Tᵢₙₖ) with a first time (Tₗᵢₘ), and
- determines a status for said compressor engagement based on said comparison.

20. Vehicle (100), **characterised in that** it comprises a system according to claim 19.

## Patentansprüche

1. Verfahren zum Bestimmen eines Status für ein Koppeln eines Kompressors, wobei ein Kompressor (203) selektiv mit einem ersten Motor (101) unter Verwendung einer Kupplung (202) gekoppelt werden kann, **dadurch gekennzeichnet, dass** das Verfahren, wenn ein Signal bezüglich des Koppelns des Kompressors (203) ausgegeben wird, umfasst
- Erfassen einer Motordrehzahländerung des ersten Motors (101),
- durch die Verwendung der erfassten Motordrehzahländerung, Bestimmen einer Darstellung einer Koppel- und/oder Entkoppelzeit beim Koppeln und/oder Entkoppeln des Kompressors,
- Vergleichen der Darstellung einer Koppel- und/oder Entkoppelzeit (Tᵢₙₖ) mit einer ersten Zeit (Tₗᵢₘ), und
- Bestimmen eines Status für das Koppeln des Kompressors auf der Grundlage dieses Vergleichs.

2. Verfahren nach Anspruch 1, wobei das Signal, das sich auf das Koppeln des Kompressors (203) bezieht, aus einer Anforderung für ein Koppeln oder einer Anforderung für ein Entkoppeln des Kompressors (203) besteht.

3. Verfahren nach Anspruch 1, ferner umfassend:
- Erzeugen eines Signals, falls die Koppel- und/oder Entkoppelzeit eine erste Zeit überschreitet.

4. Verfahren nach einem der Ansprüche 1 bis 3, ferner umfassend, wenn das Signal bezüglich des Koppelns des Kompressors (203) ausgegeben wird:
- Bestimmen einer ersten Zeit (Tᵢₙₖ) von der Ausgabe des Signals, das sich auf das Koppeln des Kompressors (203) bezieht, bis zu der Erfassung der Motordrehzahländerung in dem Motor (101), und
- Bestimmen eines Status für das Koppeln des Kompressors auf der Grundlage der ersten Zeit (Tᵢₙₖ).

5. Verfahren nach Anspruch 4, wobei die Motordrehzahländerung aus mindestens einem aus der folgenden Gruppe besteht:
- einem Absinken der Motordrehzahl auf eine erste Motordrehzahl des Motors nach der Ausgabe des Signals bezüglich des Koppelns des Kompressors (203);
- einer minimalen Motordrehzahl des Motors nach der Ausgabe des Signals bezüglich des Koppelns des Kompressors (203);
- eine erreichte Motordrehzahl des Motors, nachdem die Motordrehzahl bei dem Koppeln des Kompressors (203) überschritten ist.

6. Verfahren nach einem der vorhergehenden Ansprüche, wobei der Status für das Koppeln des Kompressors zumindest teilweise auf der Grundlage einer Ableitung für die Motordrehzahländerung bestimmt wird.

7. Verfahren nach einem der vorhergehenden Ansprüche, ferner umfassend ein Bestimmen einer Darstellung einer Koppel- und/oder Entkoppelzeit bei dem Koppeln und/oder Entkoppeln des Kompressors bei mehreren Kopplungs- oder Entkopplungsvorgängen des Kompressors, und
- Bestimmen eines Status für das Koppeln des Kompressors auf der Grundlage der mehreren Darstellungen der Koppel- und/oder Entkoppelzeit.

8. Verfahren nach Anspruch 7, ferner umfassend ein Bestimmen der Darstellungen des Koppelns und/oder Entkoppelns, wenn der Druck, gegen den der Kompressor arbeitet, aus einem ersten Druck besteht.

9. Verfahren nach einem der vorhergehenden Ansprüche, ferner umfassend ein Ausgeben des Signals bezüglich des Koppelns des Kompressors (203).

10. Verfahren nach einem der vorhergehenden Ansprüche, wobei der Status für das Koppeln des Kompressors aus einem Status für die Kupplung (202) besteht.

11. Verfahren nach Anspruch 10, wobei der Status für die Kupplung aus einem Kupplungsverschleiß besteht.

12. Verfahren nach einem der vorhergehenden Ansprüche, wobei die Kupplung (202) aus einer druckluftgesteuerten Kupplung (202) besteht.

13. Verfahren nach Anspruch 12, wobei sich der Status für das Koppeln des Kompressors auf das Vorhandensein einer Leckage an der Kopplung des Kompressors bezieht.

14. Verfahren nach einem der vorhergehenden Ansprüche, ferner umfassend, bevor das Signal bezüglich des Koppelns des Kompressors (203) ausgegeben wird:
- Deaktivieren einer Funktionalität zur Kompensation oder Drehmomentänderung beim Koppeln und/oder Entkoppeln einer Last an den Motor.

15. Verfahren nach einem der vorhergehenden Ansprüche, wobei der Kompressor in einem Fahrzeug angeordnet ist, ferner umfassend:
- Ausführen des Verfahrens, wenn sich das Fahrzeug (100) im Stillstand befindet und der Verbrennungsmotor 101 im Leerlauf läuft.

16. Verfahren nach einem der vorhergehenden Ansprüche, ferner umfassend ein Steuern des Koppelns des Kompressors (203) mit einer Steuervorrichtung.

17. Computerprogramm, das einen Programmcode umfasst, der, wenn der Programmcode in einem Computer ausgeführt wird, bewirkt, dass der Computer das Verfahren nach einem der Ansprüche 1-16 ausführt.

18. Computerprogrammprodukt, umfassend ein computerlesbares Medium und ein Computerprogramm nach Anspruch 17, wobei das Computerprogramm auf dem computerlesbaren Medium enthalten ist.

19. System zum Bestimmen eines Status für ein Koppeln eines Kompressors, wobei ein Kompressor (203) selektiv mit einem ersten Motor (101) unter Verwendung einer Kupplung (202) gekoppelt werden kann, **dadurch gekennzeichnet, dass** das System Elemente umfasst, die, wenn ein Signal bezüglich des Koppelns des Kompressors (203) ausgegeben wird,
- eine Motordrehzahländerung des ersten Motors (101) erfasst, und
- durch die Verwendung der erfassten Motordrehzahländerung eine Darstellung einer Koppel- und/oder Entkoppelzeit beim Koppeln und/oder Entkoppeln des Kompressors bestimmt,
- die Darstellung einer Koppel- und/oder Entkoppelzeit (Tᵢₙₖ) mit einer ersten Zeit (Tₗᵢₘ) vergleicht, und
- einen Status für das Koppeln des Kompressors auf der Grundlage dieses Vergleichs bestimmt.

20. Fahrzeug (100), **dadurch gekennzeichnet, dass** es ein System nach Anspruch 19 umfasst.

## Revendications

1. Procédé pour déterminer un état d'une mise en prise de compresseur, dans lequel un compresseur (203) est sélectivement mis en prise avec un premier moteur (101) à l'aide d'un embrayage (202), **caractérisé en ce que le procédé** comprend, lorsqu'un signal concernant la mise en prise dudit compresseur (203) est émis :
- la détection d'un changement de vitesse de moteur dudit premier moteur (101),
- grâce à l'utilisation dudit changement de vitesse de moteur détecté, la détermination d'une représentation d'un temps de mise en prise et/ou de retrait de mise en prise lors de la mise en prise et/ou du retrait de la mise en prise dudit compresseur,
- la comparaison de ladite représentation d'un temps de mise en prise et/ou de retrait de mise en prise (Tᵢₙₖ) avec un premier temps (Tₗᵢₘ), et
- la détermination d'un état pour ladite mise en prise de compresseur sur la base de ladite comparaison.

2. Procédé selon la revendication 1, dans lequel ledit signal concernant la mise en prise dudit compresseur (203) est constitué d'une demande de mise en prise ou d'une demande de retrait de mise en prise dudit compresseur (203).

3. Procédé selon la revendication 1, comprenant en outre :
- la génération d'un signal si ledit temps de mise en prise et/ou de retrait de mise en prise dépasse un premier temps.

4. Procédé selon l'une quelconque des revendications 1 à 3, comprenant également, lorsque ledit signal concernant la mise en prise dudit compresseur (203) est émis :
- la détermination d'un premier temps (Tᵢₙₖ) à partir de l'émission dudit signal concernant la mise en prise dudit compresseur (203) à ladite détection dudit changement de vitesse du moteur dans ledit moteur (101), et
- la détermination d'un état pour ladite mise en prise du compresseur sur la base dudit premier temps (Tᵢₙₖ).

5. Procédé selon la revendication 4, dans lequel ledit changement de vitesse du moteur est constitué d'au moins l'un parmi le groupe :
- une baisse de vitesse du moteur jusqu'à une première vitesse dudit moteur suite à l'émission dudit signal concernant la mise en prise dudit compresseur (203) ;
- une vitesse de moteur minimale dudit moteur suite à l'émission dudit signal concernant la mise en prise dudit compresseur (203) ;
- une vitesse de moteur atteinte dudit moteur après le passage de la vitesse de moteur lors de la mise en prise dudit compresseur (203).

6. Procédé selon l'une quelconque des revendications précédentes, dans lequel l'état pour ladite mise en prise du compresseur est déterminé au moins partiellement sur la base d'une dérivée pour ledit changement de vitesse du moteur.

7. Procédé selon l'une quelconque des revendications précédentes, comprenant également la détermination d'une représentation d'une mise en prise et/ou d'un temps de mise en prise lors de la mise en prise et/ou du retrait de la mise en prise dudit compresseur à plusieurs mises en prise ou retraits de mise en prises dudit compresseur, et
- la détermination d'un état pour ladite mise en prise du compresseur sur la base desdites plusieurs représentations dudit temps de mise en prise et/ou de retrait de mise en prise.

8. Procédé selon la revendication 7, comprenant en outre la détermination desdites représentations de mise en prise et/ou de retrait de mise en prise lorsque la pression contre laquelle ledit compresseur travaille consiste en une première pression.

9. Procédé selon l'une quelconque des revendications précédentes, comprenant également l'émission dudit signal relatif à la mise en prise dudit compresseur (203).

10. Procédé selon l'une quelconque des revendications précédentes, dans lequel ledit état pour ladite mise en prise du compresseur consiste en un état pour ledit embrayage (202).

11. Procédé selon la revendication 10, dans lequel ledit état pour ledit embrayage consiste en une usure d'embrayage.

12. Procédé selon l'une quelconque des revendications précédentes, dans lequel ledit embrayage (202) consiste en un embrayage (202) commandé par de l'air comprimé.

13. Procédé selon la revendication 12, dans lequel ledit état pour ladite mise en prise du compresseur est associé à l'existence d'une fuite au niveau de ladite mise en prise du compresseur.

14. Procédé selon l'une quelconque des revendications précédentes, comprenant également, avant l'émission dudit signal concernant la mise en prise dudit compresseur (203) :
- la désactivation de la fonctionnalité pour la compensation ou les changements de couple lors de la mise en prise et/ou du retrait de mise en prise d'une charge sur ledit moteur.

15. Procédé selon l'une quelconque des revendications précédentes, dans lequel ledit compresseur est agencé dans un véhicule, comprenant également :
- la réalisation dudit procédé lorsque ledit véhicule (100) est à l'arrêt avec le moteur à combustion 101 au ralenti.

16. Procédé selon l'une quelconque des revendications précédentes, comprenant également la commande de la mise en prise dudit compresseur (203) avec un dispositif de commande.

17. Programme informatique comprenant un code de programme qui, lorsque ledit code de programme est exécuté sur un ordinateur, permet que ledit ordinateur réalise le procédé selon l'une quelconque des revendications 1 à 16.

18. Produit de programme informatique comprenant un support lisible par ordinateur et un programme informatique selon la revendication 17, ledit programme informatique étant compris dans ledit support lisible par ordinateur.

19. Système de détermination d'un état pour une mise en prise de compresseur, dans lequel un compresseur (203) est sélectivement mis en prise avec un premier moteur (101) par l'utilisation d'un embrayage (202), **caractérisé en ce que** le système comprend des éléments qui, lorsqu'un signal concernant la mise en prise dudit compresseur (203) est émis :
- détectent un changement de vitesse de moteur dudit premier moteur (101), et
- grâce à l'utilisation dudit changement de vitesse de moteur détecté, déterminent une représentation d'un temps de mise en prise et/ou de retrait de mise en prise lors de la mise en prise et/ou du retrait de la mise en prise dudit compresseur,
- comparent ladite représentation d'un temps de mise en prise et/ou de retrait de mise en prise (Tᵢₙₖ) avec un premier temps (Tₗᵢₘ), et
- déterminent un état pour ladite mise en prise de compresseur sur la base de ladite comparaison.

20. Véhicule (100), **caractérisé en ce qu'**il comprend un système selon la revendication 19.
